# EUROPEAN PATENT APPLICATION

(11) **EP 1 650 658 A2**
(43) Date of publication of application: **26.04.2006**
(21) Application number: 04258067.0
(22) Date of filing: 22.12.2004
(51) Int. Cl.: G06F 11/14

(54) **Apparatus and method for obtaining a log of information**

(30) Priority: 30.09.2004 JP 2004286964
(71) Applicant: FUJITSU LIMITED, Kawasaki-shi, Kanagawa 211-8588 (JP)
(72) Inventor: Miyamoto, Yuji, c/o Fujitsu Broad, Shinagawa-ku Tokyo 141-8581 (JP); Hikita, Mikito, c/o Fujitsu Broad, Shinagawa-ku Tokyo 141-8581 (JP); Zhou, Sijun, c/o Fujitsu Broad, Shinagawa-ku Tokyo 141-8581 (JP); Tian, Yue, c/o Fujitsu Broad, Shinagawa-ku Tokyo 141-8581 (JP)
(74) Representative: Stebbing, Timothy Charles

(57) **Abstract**

An apparatus for obtaining a write log when a file in a computer is written to a recording medium, includes an event detecting means for detecting an event of a file access, a reading means for reading file information by detecting that the file access is a read access to the file in the time from an open access to a close access when the event detecting means detects an event and a log obtaining means for outputting the file information read by the reading means to a memory area as a log when the file access is determined as a close access when the event detecting means detects an event. The apparatus for obtaining a write log prevents information in the computer from being written freely and directly to an external recording medium, not via an OS but via an original driver such as writing software, whereby information leakage can be managed.

## Description

### BACKGROUND OF THE INVENTION

### 1. Field of the Invention

The present invention relates to apparatus and method for obtaining a log of information written on a recording medium and a program therefor and, particularly, it relates to an apparatus and a method for obtaining a write log when a file in a computer is written to an optical disc recording medium such as a CD-R, and a program therefor.

### 2. Description of the Related Art

As a method for obtaining a log when a file in a computer is copied to a flexible disc (FD) or a storage device through a USB interface, there is a method in which a status change of a designated folder is monitored and when the status is changed, the change is recorded as an event to thereby obtain information on the copied file (see Patent Publication 1).
Also, a network printing system for preventing leakage of secrets is disclosed in which a history of information printed via a printer, date and time and users who output information, is stored, the stored information can be retrieved, a means for enabling to trace the history, when information is leaked, is provided and this can be a deterrence against information leakage (see Patent Publication 2).

[Patent Publication 1] Japanese Unexamined Patent Publication No. 2002-041359
[Patent Publication 2] Japanese Unexamined Patent Publication No. 2004-118243, paragraph [0013]

### SUMMARY OF THE INVENTION

Generally a method for obtaining a log according to the prior art described in Patent Publication 1 is effective for an operation carried out via an operating system (OS) file system. However, a write operation to an optical disc recording medium such as a CD-R (including CD-RW, DVD-R, DVD-RW) is performed not via an OS file system but is performed directly to the recording medium via a writing software exclusive driver which operates as an application program, and therefore, an event when writing to the optical disc recording medium cannot be obtained and information on the copied file cannot be obtained. Accordingly, strict management regarding information leakage cannot be carried out. Simply stated, the person who took the file from a computer cannot be identified later.

The present invention is aimed at solving problems of a log obtaining method of the above prior art in order to strictly control leakage of information from a computer by restricting free and direct writing of information in a computer onto an external recording medium via an exclusive driver such as writing software, not via an OS file system. Concretely, the present invention is aimed to provide an apparatus, method and a program for obtaining a write log when a file in a computer is written onto an optical disc recording medium.

A log obtaining apparatus to achieve the above purpose is an apparatus for obtaining a write log in which a file in a computer is written to a recording medium, is characterized in that it comprises event detecting means for detecting an event of a file access, reading means for reading file information after detecting that the file access is a read access to the file in the time from an open access to a close access when the event detecting means detects an event and log obtaining means for outputting the file information read by the reading means to a memory area as a log when the file access is determined as a close access when the event detecting means detects an event.

In the apparatus for obtaining a log, the log obtaining means outputs a file log which does not include a write access to the file in the time from an open access to a close access when the event detecting means detects the event.
In the apparatus for obtaining a log, if a size of a file obtained as a log by the log obtaining means is identical to a file size managed by an operating system, a log of the file is output.

A log obtaining method to achieve the above purpose according to the present invention is a method for obtaining a write log in which a file in a computer is written to a recording medium, is characterized in that it comprises a step for detecting an event of a file access, a step for reading file information after detecting that the file access is a read access to the file in the time from an open access to a close access when an event is detected in the detecting step, and a step for obtaining a log by outputting the file information read in the reading step to a memory area as the log when the file access is determined as a close access when an event is detected in the detecting step.

A program used for a log obtaining apparatus to achieve the above purpose according to the present invention is a program used for an apparatus for obtaining a write log in which a file in a computer is written to a recording medium, is characterized in that it comprises a step for detecting an event of a file access, a step for reading file information after detecting that the file access is a read access to the file in the time from an open access to a close access when an event is detected in the detecting step, and a step for obtaining a log by outputting the file information read in the reading step to a memory area as the log when the file access is determined as a close access when an event is detected in the detecting step.

According to the present invention, even if data is written onto an optical disc recording medium such as a CD-R, using an exclusive writing software, information of the written file can be obtained as a log. Moreover, a write operation, of a file in a computer, freely and directly to an external recording medium is restricted so that leakage of information from a computer can be strictly managed.
Furthermore, according to the present invention, because the most common case in data leakage from a computer is taking a copy of a whole file, a log in such case is taken so that leakage of information from a computer can be strictly managed.

### BRIEF DESCRIPTION OF THE DRAWINGS

Fig. 1 shows an embodiment of an apparatus for obtaining a log according to the present invention.
Fig. 2 is a flowchart of a log obtaining program used for an apparatus for obtaining a log, shown in Fig. 1.
Fig. 3 shows a concrete example of a table used for making a log file stored in an apparatus for obtaining a log shown in Fig. 1.
Fig. 4 is a table showing a list of a log file obtained when writing onto an optical disc recording medium.
Fig. 5 shows a form in which a server monitors information leakage from plural apparatus for obtaining logs according to the present invention.

### DESCRIPTION OF THE PREFERRED EMBODIMENTS

Embodiments of the present invention will be explained below in detail with reference to the accompanying drawings.

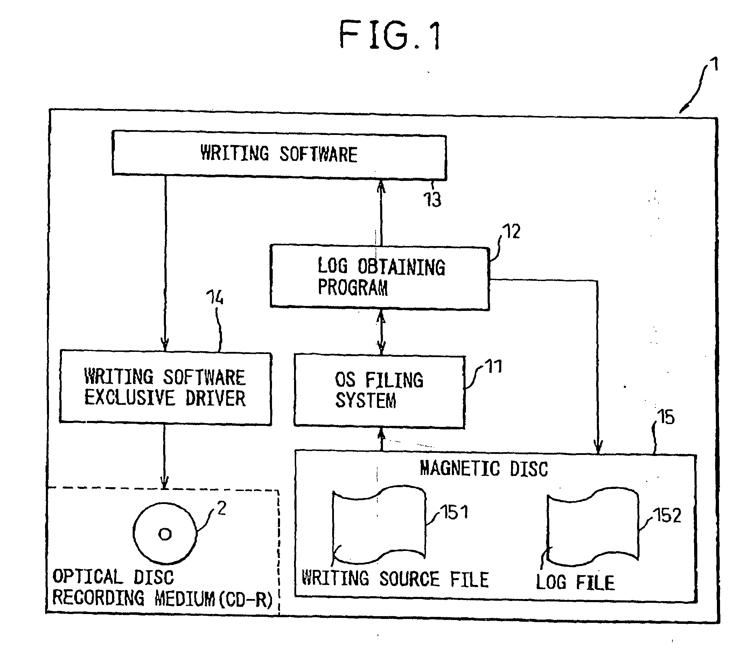

Fig. 1 shows an embodiment of an apparatus for obtaining a log according to the present invention. An apparatus 1 for obtaining a log shown in Fig. 1 is comprised of, for example, a personal computer, having components, not shown in Fig. 1, such as a computer body, an input device such as a keyboard and a mouse, an output device such as a display unit and a printer, and a communication device to send and receive a program or data between the computer body and an external computer via LAN or the Internet.

The above computer body has a CPU, a RAM as a main memory which is used as a temporary memory area for a program or data which the CPU.executes and as a work area for the CPU, a ROM storing regular programs or data, an auxiliary memory device storing programs or data to be written in the RAM when required and including, for example, a magnetic disc 15, a FDD (flexible disc drive) and a reading/writing device to read a program or data from a recording medium such as a compact disc CD, and to write the same to a writable disc, for example, an optical disc (CD-R) 2. Herein, the reading/writing device is provided with a writing exclusive driver software 14 to drive the device when writing a program or data to a recording medium such as an optical disc (CD-R) 2. The CPU or the regular programs contains an Operating System (OS) which provides basic functions, such as an input/output function and a management of a magnetic disc or a memory, which are commonly used by application software.

In a known personal computer, if a file 151 stored in the magnetic disc 15 is transferred into the optical disk (CD-R) 2, the file 151 is read from the magnetic disc 15 via an OS filing system 11 first. After that, when the file 151 is transferred into the CD-R 2, the file 151 is transferred into the CD-R 2 directly by the writing software exclusive driver 14 driven by writing software 13 which is only used for writing data onto an optical disc, not via the OS filing system 11. Namely, the write operation is carried out directly to the CD-R 2 not via the OS filing system 11 but via the writing software exclusive driver 14, and therefore an event cannot be obtained in case of the write operation to the optical disc recording medium, and this results in a failure in obtaining information on the copied file.

In the present invention, it is conceived that when a write operation to the optical disc recording medium is performed, the file information cannot be obtained because the write operation is carried out via the writing software exclusive driver 14 of the writing software 13, however, when a read operation is performed, the file information can be obtained because the read operation is carried out via the OS filing system 11 as a usual file access. Namely, when the writing software 13 is started-up, an application program monitors a file access via the OS filing system 11 and determines whether or not the file is copied to the optical disc recording medium CD-R 2 according to the read file information, and obtains a log of the file which could have been copied to the optical disc recording medium CD-R 2.

Consequently, in the embodiment of an apparatus for obtaining a log according to the present invention, it is structured that when the file 151 is written into the CD-R 2, the writing software 13 reads the file 151 via the OS filing system 11 and a log obtaining program 12 and after that the writing software exclusive driver 14 is driven to write into the CD-R 2. The log obtaining program 12 is executed at a timing of calling to the OS filing system 11 from the application program. Concretely, it is in advance registered that the log obtaining program 12 hooks calling for file accesses such as file open, file close, file read and file write, from the writing software 13 to the OS filing system 11. A processing routine of the log obtaining program 12 will be explained below with reference to a flowchart.

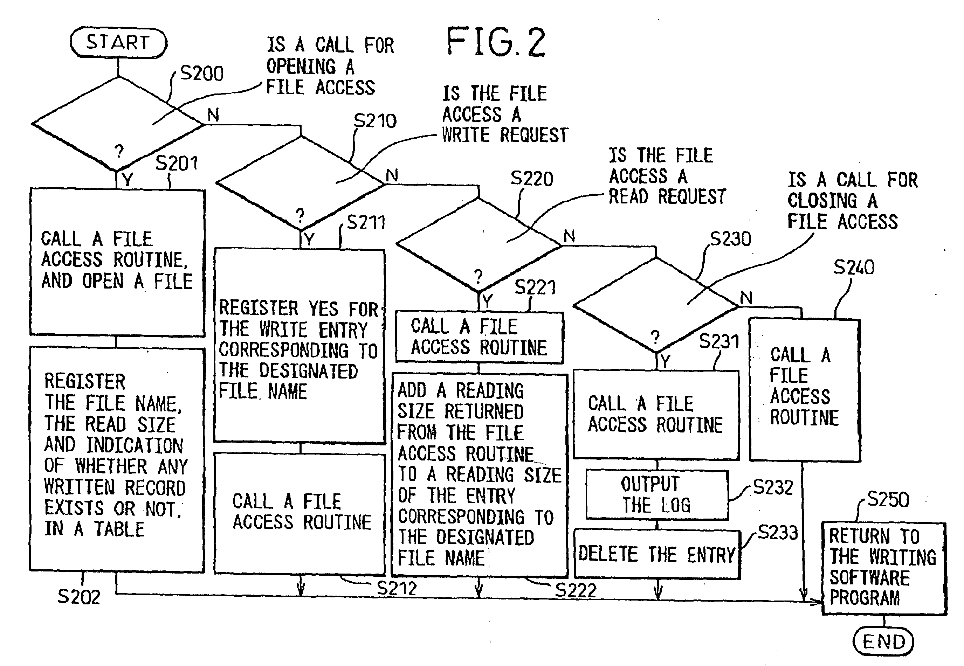

Fig. 2 is a flowchart of a log obtaining program used for the log obtaining apparatus shown in Fig. 1.
In step S200, whether or not the calling to the OS filing system 11 from the application program is a request to open is checked. If the answer is YES, the control goes to step S201 and if NO, the control goes to step S210.
In step S201, a file access routine (OS file system 11) is called to open the file, and the control goes to step S202 and information such as a file name, READ size and absence or presence of WRITE is registered in a table which is temporarily stored in a memory. At this moment, WRITE is set to none.

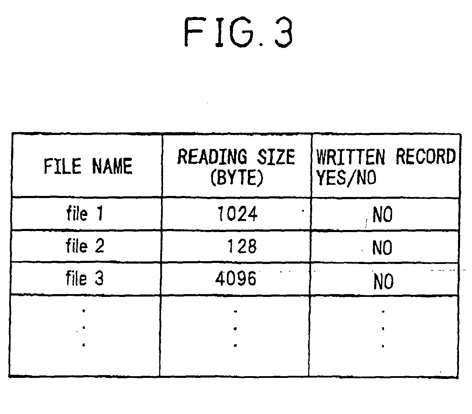

Fig. 3 shows a concrete example of a table used for making a log file stored in the log obtaining apparatus shown in Fig. 1. In step S202, as shown in a first row of Fig. 3, the file name "file 1", the reading size; "1024B" and writing record; "No" are registered in a table and the control goes to step S250. This process in step S202 is repeated plural times while the file is opened and is closed, as file names are registered as shown in a second and third rows in Fig. 3.
In step S210, it is determined whether or not the file access is a write request or not. If the result is YES, the control goes to step S211, and if NO, the control goes to step S220.
In step S211, the existence of a WRITE entry corresponding to a designated file name is determined as YES and registers "YES" in the table, and after that the control goes to step S212, where the file access routine is called to execute the write process.

Because all the read files are not copied to CD-R 2, if information of all the read files are simply obtained, extra information other than information actually written are also obtained, and the extra information must be deleted. Accordingly, only a read file which satisfies the following conditions 1 and 2 at filing access is determined to be a written file to the CD-R 2, and only information of the files is obtained as a log.

<Condition 1> : Only a read is performed for a period from the file is opened till the file is closed and write or the like is not performed.
Because the file to be copied cannot be renewed, if the condition 1 is not satisfied, the file access is considered not to be written into the CD-R 2.
<Condition 2> : Data size of the read file is identical to the actual size of the file (a file size managed in the operating system).
Because, in general, if a file is copied, the entirety of the file are copied in most cases. And therefore, if only a part of the file is read, it can be considered that the file is not copied. Accordingly, if the <condition 2> is satisfied, the file access can be considered not to be written to the CD-R 2. Steps to record the file which satisfied both conditions 1 and 2 as a log are described below.

As will be described below, the read of the file cannot be carried out in one read, and the entirety of the file can often be read several times after file is opened, and then the file is closed.
In step S220, it is determined whether or not the file access is read request or not. If the result is YES, the control goes to step S221, and if NO, the control goes to step S230.
In step S221, the file access routine is called and the control goes to step S222 where a READ size which has been returned from the file access routine is added to a READ size in the entry corresponding to the file name (for example, file 2).

In step S230, it is determined whether or not the file access is close request or not. If the result is YES, the control goes to step S231, and if NO, the control goes to step S240.
In step S231, the file access routine is called and close process of the file is performed. In step S232, it is determined whether or not the file closed in step 5231 satisfies the aforementioned conditions 1 and 2, and only when the both conditions are satisfied, it outputs the log file. The form of the output to the log file will be described later. Successively, the control goes to step 5232 where the entry of the closed file is deleted. The related information is stored in the computer as a log file and is used for managing leakage of information from the computer.
In step S240, the file access routine is called out.
In step S250, the process goes back to the application program.

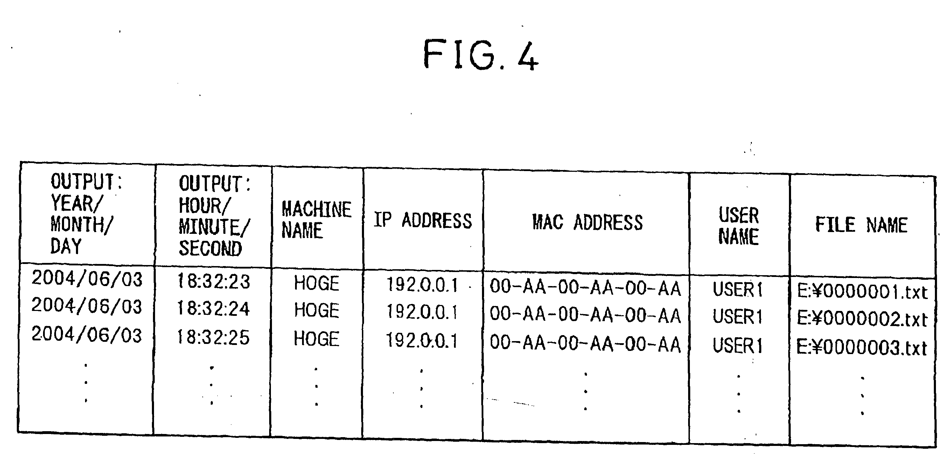

Fig. 4 is a table showing a list of the log file obtained when writing onto an optical disc recording medium, and shows a concrete example of the log file obtained in step S232 in the flowchart shown in Fig. 2. Corresponding to file names, such as "file 1", "file 2" and "file 3" in the table shown in Fig. 3, file names, such as "E:¥0000001.tex", "E:¥0000002.tex" and "E:¥00000003.tex" are shown in the table in Fig. 4. In this list, an output of a date (year, month, day) and an output of a time (hour, minute, second), a machine name, an IP address and a user name, which are obtained by a self-inquiry regarding information of the computer by the operating system (OS) are indicated, and moreover, a file name is shown. The operator of the log obtaining apparatus 1 can display and print out this list at any time when necessary.

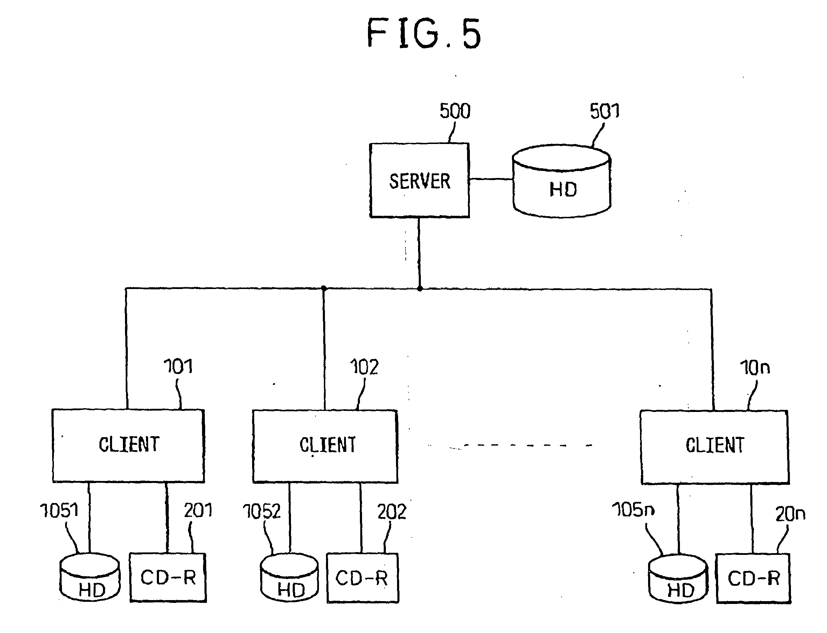

Fig. 5 shows an embodiment in which a server monitors information leakage from plural log obtaining apparatus according to the present invention. The plural clients 101, 102, ..., 10n are the log obtaining apparatus according to the present invention. Each client has a magnetic disc 1051, 1052, ..., 105n therein and can write a file stored in the client to each optical disc (CD-R) 201, 202, ..., 20n. A server 500 is a general large computer and has a large-capacity magnetic disc 501 and is connected to each client via the Internet or LAN.
The each client stores the one or more log files independently as described with reference to Figs. 1 to 4 and transfers a log file to the server 500 each time when the log file is generated. The server 500 receives and stores the log files which are also stored in the each client, in the magnetic disc 501 and monitors the leakage of the information from the plural clients.

## Claims

1. An apparatus for obtaining a write log when a file in a computer is written to a recording medium, is **characterized in that** it comprises:
event detecting means for detecting an event of a file access,
reading means for reading file information after detecting that the file access is a read access to the file in the time from an open access to a close access when the event detecting means detects an event, and,
log obtaining means for outputting the file information read by the reading means to a memory area as a log when the file access is determined as a close access when the event detecting means detects an event.

2. An apparatus for obtaining a log according to claim 1, wherein the log obtaining means outputs a file log which does not include a write access to the file in the time from the open access to the close access when the event detecting means detects the event.

3. An apparatus for obtaining a log according to claim 1 or 2, wherein if a size of a file obtained as a log by the log obtaining means is identical to a file size managed by an operating system, a log of the file is output.

4. A method for obtaining a write log in which a file in a computer is written to a recording medium, is **characterized in that** it comprises:
a step for detecting an event of a file access,
a step for reading file information after detecting that the file access is a read access to the file in the time from an open access to a close access when an event is detected in the detecting step, and
a step for obtaining a log by outputting the file information read in the reading step to a memory area as the log when the file access is determined as a close access when an event is detected in the detecting step.

5. A program used for an apparatus for obtaining a write log in which a file in a computer is written to a recording medium, is **characterized in that** it comprises:
a step for detecting an event of a file access,
a step for reading file information after detecting that the file access is a read access to the file in the time from an open access to a close access when an event is detected in the detecting step, and
a step for obtaining a log by outputting the file information read in the reading step to a memory area as the log when the file access is determined as a close access when an event is detected in the detecting step.
